(19) **Europäisches Patentamt / European Patent Office / Office européen des brevets**

(11) **EP 1 634 277 B1**

(12) **EUROPÄISCHE PATENTSCHRIFT**

(45) Veröffentlichungstag und Bekanntmachung des Hinweises auf die Patenterteilung:
**04.07.2012 Patentblatt 2012/27**

(21) Anmeldenummer: **04739953.0**

(22) Anmeldetag: **16.06.2004**

(51) Int Cl.:
*G10L 19/00* (2006.01)   *H04M 3/22* (2006.01)

(86) Internationale Anmeldenummer:
**PCT/EP2004/006487**

(87) Internationale Veröffentlichungsnummer:
**WO 2004/112002 (23.12.2004 Gazette 2004/52)**

(54) **EXTRAHIERUNG VON TESTSIGNALABSCHNITTEN ZUR QUALITÄTSMESSUNG EINES AUDIOSIGNALS**

EXTRACTION OF TEST SIGNAL SECTIONS FOR MEASURING THE QUALITY OF AN AUDIO SIGNAL

EXTRACTION DE SECTIONS DE SIGNAUX D'ESSAI POUR LA MESURE DE LA QUALITE D'UN SIGNAL AUDIO

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.06.2003 DE 10327239**

(43) Veröffentlichungstag der Anmeldung:
**15.03.2006 Patentblatt 2006/11**

(73) Patentinhaber: **Opticom, Dipl.-Ing. Michael Keyhl GmbH**
**91058 Erlangen (DE)**

(72) Erfinder:
• **KEYHL, Michael**
**90562 Heroldsberg (DE)**

• **SCHMIDMER, Christian**
**90491 Nürnberg (DE)**
• **BITTO, Roland**
**90453 Nürnberg (DE)**

(74) Vertreter: **Zinkler, Franz et al**
**Schoppe, Zimmermann, Stöckeler & Zinkler Patentanwälte**
**Postfach 246**
**82043 Pullach bei München (DE)**

(56) Entgegenhaltungen:
**EP-A- 1 271 470    WO-A-02/065456**

**Beschreibung**

Die vorliegende Erfindung bezieht sich auf Hörtests zur Bewertung der Qualität von codierten Sprach- und Audiosignalen bzw. zur Bewertung der Qualität einer Telephonverbindung, wie beispielsweise einer drahtgebundenen oder drahtlosen Telephonverbindung. Insbesondere bezieht sich die vorliegende Erfindung auf die Bereitstellung von Testsignalabschnitten zum Durchführen von sogenannten subjektiven und/oder objektiven Messungen zur Qualitätsbeurteilung.

Zur meßtechnischen Bewertung der Qualität von codierten Sprach- und Audiosignalen werden heute standardisierte perzeptionsbasierte Meßverfahren (Perceptual Measurement) eingesetzt. Bekannte Verfahren sind das sogenannte PESQ-Verfahren (PESQ = Perceptual Evaluation of Speech Quality = gehörrichtige Bewertung der Sprachqualität), das in dem Standardisierungsdokument ITU-T P.862 (02/2001) beschrieben ist. Ein anderes bekanntes Meßverfahren zur Qualitätsbeurteilung ist das sogenannte PEAQ-Verfahren (PEAQ = Objective Measurements of Perceived Audio Quality = objektive Messungen der wahrgenommenen Audioqualität) ist in dem Standardisierungsdokument Rec. ITU-R BS. 1387-1 (1998-2001) dargestellt. Diesen Verfahren bzw. weiteren Verfahren zur Qualitätsbeurteilung ist gemeinsam, daß ein zu testendes Signal ("Testsignal"), das in der Regel das Ausgangssignal eines Systems oder Netzwerks oder allgemein eines zu untersuchenden Elements (DUT) ist, mit einem Original- oder auch Referenzsignal, das in der Regel das Eingangssignal in das zu testende DUT ist, verglichen wird.

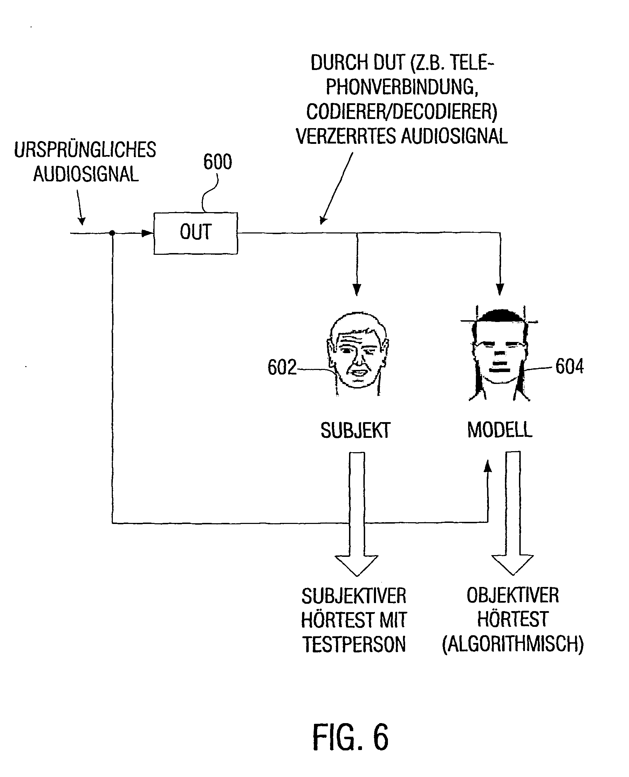

Ein solches allgemeines "Setting" ist in Fig. 6 dargestellt. Das ursprüngliche Audiosignal, das in ein DUT 600 eingespeist wird, stellt hierbei das Referenzsignal oder Eingangssignal dar, während das Ausgangssignal hinter dem DUT 600 dazu verwendet wird, um entweder einen subjektiven Hörtest mit Testpersonen durchzuführen, wie es durch ein Subjekt 602 angedeutet ist, oder ein Qualitätsbeurteilungsverfahren, wie beispielsweise PESQ oder PEAQ durchzuführen, wie es durch ein Modell 604 dargestellt ist. Durch Zuführung des Ausgangssignals aus dem DUT 600 zu dem Subjekt 602 ist somit ein subjektiver Hörtest durchführbar, der typischerweise mit mehreren Testpersonen in standardisierten Räumen durchgeführt wird. Durch Zuführung des ursprünglichen Audiosignals vor dem DUT 600, also des Referenzsignals, und des durch das DUT verzerrten Audiosignals zu dem Modell 604 kann ein objektiver Test, also eine algorithmische Evaluierung ohne subjektive Testpersonen, durchgeführt werden.

Das DUT 600 ist typischerweise ein System, dessen Einfluß auf die Audioqualität bewertet werden soll. Ein solches System ist beispielsweise eine Telekommunikationsverbindung und insbesondere eine Telephonverbindung, die drahtlos oder drahtgebunden sein kann. Ein alternatives DUT 600 ist beispielsweise eine Codierer/Decodiererstrecke, um die Qualitätsbeeinträchtigung eines Codierkonzepts mit nachgeschaltetem Decodierkonzept zu beurteilen. Die Ausgabe des Modells soll, wenn das Modell im beabsichtigen Rahmen arbeitet, eine Vorhersage der wahrgenommenen Qualität sein, die Testpersonen, wenn sie das Ausgangssignal des DUT 600 hören, auf einer Skala subjektiv angeben würden.

Beim PESQ-Verfahren beispielsweise wird das ursprüngliche Audiosignal, also das Audiosignal vor dem DUT 600, das das Referenzsignal ist, unter Berücksichtigung einer zeitlichen Verzögerung (Delay), mit dem durch das DUT 600 verzerrten Audiosignal verglichen, wobei ein psychoakustisches Modell eingesetzt wird. Insbesondere werden sowohl das ursprüngliche Audiosignal vor dem DUT 600 als auch das verzerrte Audiosignal nach dem DUT 600 in eine sogenannte interne Darstellung umgewandelt, die analog zu der psychophysischen Darstellung von Audiosignalen im menschlichen Gehörsystem ist, wobei insbesondere Parameter wie die Bark-Skala und die Lautheit (Sone) berücksichtigt werden, wie es in der Technik bekannt ist. Die interne psychophysikalische Darstellung des ursprünglichen Audiosignals wird dann mit der internen psychophysikalischen Darstellung des verzerrten Audiosignals verglichen, um je nach Modell einen oder mehrere Fehlerparameter zu berechnen, die eine quantitative Qualitätsaussage zulassen.

Ein anhand von Fig. 6 dargestelltes Qualitätsbeurteilungsverfahren wird auch als "intrusives" Verfahren bezeichnet, da eine Einspeisung des Referenzsignals, also des ursprünglichen Audiosignals, in das zu testende System (DUT 600) notwendig ist. Am Ausgang des DUT erhält man dann, wie es ausgeführt worden ist, das zu bewertende Testsignal, das in Fig. 6 auch als verzerrtes Audiosignal bzw. allgemein als Audiosignal bezeichnet wird. Der Ausgang des DUT 600 kann beispielsweise das ferne Ende einer Telephonverbindung zweier Teilnehmer sein, wobei das ursprüngliche Audiosignal am nahen Ende als Referenzsignal eingespeist wird. In diesem Fall würde das Meßverfahren wie beispielsweise PESQ, die Sprachqualität einer Telephonverbindung charakterisieren.

Wie es ausgeführt worden ist, basieren die algorithmischen Meßverfahren auf einer Kombination von psychoakustischen und kognitiven Erkenntnissen über die menschliche Gehörwahrnehmung. Das zugrundeliegende Experiment dieser Verfahren besteht zunächst darin, daß ein subjektiver Hörtest durchgeführt wird, in dem eine statistisch ausreichende Anzahl von Testhörern ("Subjects") eine Reihe von Sprach- bzw. Audiosequenzen zur Beurteilung vorgeführt wird. Die Tester bewerten diese Sequenzen mittels einer diskreten bzw. kontinuierlichen Qualitätsskala, die in der Technik auch als "Opinion Scale" bezeichnet wird und beispielsweise von 1 ("bad") bis 5 ("excellent") reicht. Solche subjektiven Hörtests sind beispielsweise in dem Standardisierungsdokument ITU-T P.800 (08/1996) dargestellt.

Es hat sich gezeigt, daß reale Testpersonen nur kurze Sequenzen qualitativ beurteilen können. Wird den Testpersonen eine längeren Sequenz, also ein längerer Testsignalabschnitt vorgeführt, so setzt eine gewissermaßen "statistische Mittelung" ein. Anders ausgedrückt führt der kognitive Prozeß des Vergessens von gehörten Störungen zu einer Verfälschung der Aussagen der Testpersonen, wobei diese Verfälschung aufgrund der Tatsache, daß die Testpersonen Menschen sind, systemimmanent ist.

Konsequenterweise sind daher in standardisierten Testprozeduren, wie beispielsweise in dem Standardisierungsdokument Rec. ITU-R BS.1116-1 oder Rec. ITU-R BS.1534, Testsequenzen vorgeschrieben, die eine Dauer von typischerweise zwischen 8 und 12 Sekunden haben, deren maximale Länge jedoch 20 Sekunden nicht überschreitet. Diese Testsequenzen sind zwar reale Signale, sie sind jedoch nicht stochastisch bzw. zufällig aus einem realen Szenario stammend, sondern standardisierte vorgegebene Testsequenzen, die in einem Experiment in das zu betrachtende DUT eingespeist werden können, um das Test-Eingangssignal, also das durch das DUT verzerrte Audiosignal zu gewinnen.

In jüngster Zeit wurden Entwicklungen vorgestellt, die es erlauben, auch nicht-intrusive Tests durchzuführen, die also eine Schätzung der Sprachqualität ausschließlich aufgrund einer Analyse des Testsignals auf der Empfangsseite, also ohne Einspeisung eines Referenzsignals auf der Sendeseite, ermöglichen sollen. Solche Entwicklungen sind für praktische Realisierungen von besonderem Vorteil, da sie beispielsweise eine Aussage über die Sprachqualität einer Mobilfunkverbindung einzig im Endgerät zulassen, ohne daß irgendwelche meßtechnischen Anordnungen oder Vorkehrungen bzw. Manipulationen im Telephonnetz gewissermaßen zur Einspeisung eines Referenzsignals erforderlich wären. Jedes reale Telephongespräch sollte mit einem solchen nicht-intrusiven Konzept einer Qualitätsbeurteilung unterziehbar sein.

Dieses neue nicht-intrusive Konzept befindet sich gerade in der Entwicklung. Es wird davon ausgegangen, daß aus Vergleichbarkeitsgründen mit intrusiven Meßkonzepten auch für das nicht-intrusive Meßkonzept Testsequenzlängen vorgeschrieben werden, die den Testsequenzlängen aus den intrusiven Tests ähnlich sind, die also so gewählt sind, daß beim Testhörer aufgrund einer zu langen Sequenz keine sogenannte "statistische Mittelung" oder ein Vergessen eines Fehlers eintritt, und die andererseits lange genug sind, damit überhaupt eine vernünftige Aussage getroffen werden kann. Wie es bereits ausgeführt worden ist, liegt die Dauer der Testsequenzen typischerweise zwischen 8 bis 12 Sekunden, wobei manchmal auch Testsequenzen, also Testsignalabschnitte mit maximal 20 Sekunden zugelassen werden.

Insbesondere bei nicht-intrusiven Qualitätsbeurteilungen eines verzerrten Audiosignals bzw. bei der Beurteilung eines Einflusses eines beispielsweise Übertragungskanals 600 in Fig. 6 auf das Audiosignal kann nicht mehr ohne weiteres mit vordefinierten Testsignalabschnitten gearbeitet werden. Statt dessen müssen reale Audiosignale zur Qualitätsbeurteilung herangezogen werden. Dennoch soll eine Vergleichbarkeit der Meßergebnisse gewährleistet werden, da dies gerade ein wesentlicher Vorteil von standardisierten Qualitätsbeurteilungsverfahren ist, nämlich dass die Ergebnisse verschiedener Tests vergleichbar sein sollen.

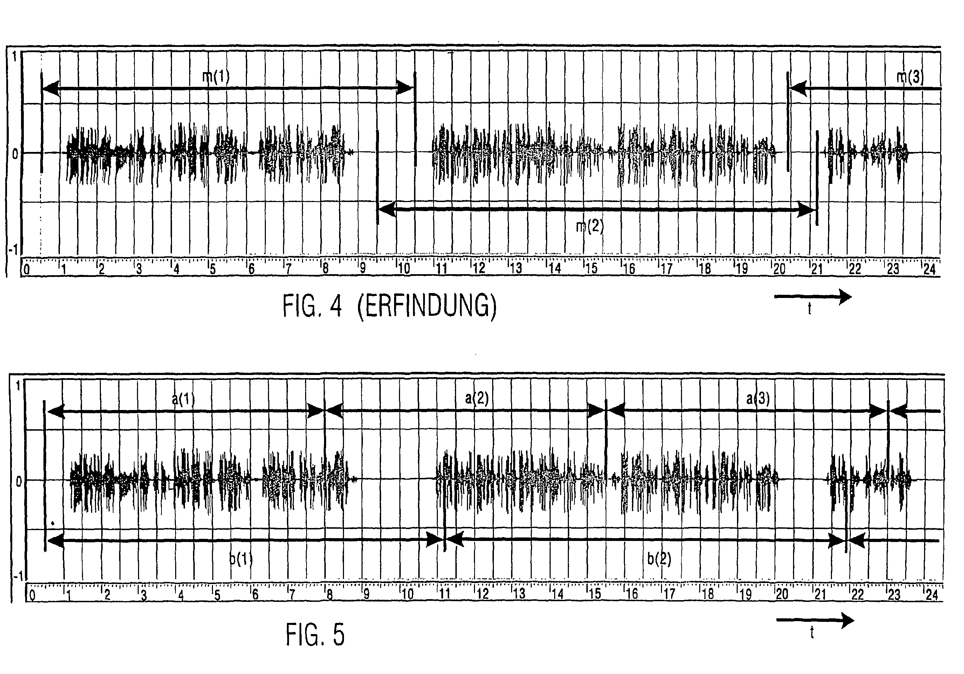

Nachfolgend wird anhand von Fig. 5 die sich dabei ergebende Problematik dargestellt. Fig. 5 zeigt ein Zeitdiagramm eines über eine Telephonverbindung übertragenen Signals, also eines Audiosignals, das durch die Übertragung über eine Telephonverbindung verzerrt worden ist. In dem Zeitdiagramm von Fig. 5 ist entlang der Ordinate eine normierte Amplitude aufgetragen, während entlang des Abszisse die Zeit t aufgetragen ist. Das in Fig. 5 dargestellte Signal zeigt deutlich die Charakteristik eines Sprachsignals, dahingehend, daß zum einen informationstragende Abschnitte, wie beispielsweise der Abschnitt zwischen einer Sekunde und neun Sekunden, vorhanden sind, und daß die informationstragenden Abschnitte durch nicht-informationstragende Abschnitte, die auch als Pausen bezeichnet werden, voneinander getrennt sind. Der nicht-informationstragende Abschnitt, der auf den ersten informationstragenden Abschnitt folgt, erstreckt sich von etwa 9 Sekunden bis zu etwa 10,8 Sekunden. Dann folgt wieder ein längerer informationstragender Abschnitt von 10,8 Sekunden bis etwa 20,2 Sekunden. Diesem zweiten informationstragenden Abschnitt folgt wieder eine Pause zwischen 20,3 Sekunden etwa und 21,3 Sekunden. Der zweiten Pause folgt wieder ein informationstragender Abschnitt, der sich etwa bis 23,7 Sekunden erstreckt, woraufhin wieder eine Pause folgt.

Die einfachste Möglichkeit zur Extraktion von Testsignalabschnitten würde darin bestehen, das in Fig. 5 dargestellte Audiosignal in aneinander angrenzende Abschnitte gleicher Länge zu zerlegen. Eine Art der Fragmentierung, um Testsignalabschnitte mit einer Dauer von etwa 10 Sekunden zu gewinnen, ist durch b(1), b(2) etc. dargestellt. Eine andere Art der Fragmentierung des in Fig. 5 dargestellten Audiosignals, um Testsignalabschnitte mit einer Dauer von beispielsweise 7,5 Sekunden zu gewinnen, ist durch a(1), a(2), a(3), ..., dargestellt.

Die Fragmentierung des Audiosignals in Abschnitte konstanter Länge ist dahingehend problematisch, daß nicht mehr kalkulierbar ist, wie groß der informationstragende Abschnitt in einem Testsignalabschnitt ist, und wie groß der nicht-informationstragende Abschnitt in einem Testsignalabschnitt ist, d. h. wie groß die Gewichtung Information/Pause ist. Darüber hinaus kann es insbesondere bei Telephongesprächen vorkommen, daß zwischen den Gesprächspartnern längere Pausen entstehen. Dies würde dazu führen, daß ein Testsignalabschnitt beispielsweise nur ausschließlich aus einer Pause bestehen würde. Es ist ohne weiteres ersichtlich, daß allein aufgrund einer Pause keine Qualitätsbeurteilung möglich ist.

Das in Fig. 5 gezeigte Prozedere ist lediglich dann "gutartig", wenn jegliches Telephongespräch z. B. immer kürzer als 20 Sekunden ist, so daß das gesamte Telephongespräche als Testsignalabschnitt genommen werden könnte. Ist dies jedoch nicht der Fall, so ergibt die Aufteilung in konstante Zeitabschnitte, wie sie anhand von Fig. 5 dargestellt worden ist, keinerlei Vergleichbarkeit mit einem subjektiven Hörtestergebnis. Darüber hinaus werden die Meßperioden unterschiedlicher Dauer zumindest zu unterschiedlichen, wenn nicht unbrauchbaren Ergebnisse führen. Insbesondere für die Messung in Mobilfunknetzen aus dem fahrenden Auto mittels sogenannter "Drive Test Tools" ist eine möglichst kurze Meßdauer erwünscht bzw. die Fragmentierung realer Testgespräche in kürzere Zeitintervalle bzw. Meßperioden, wie sie bei a(1), a(2), a(3) in Fig. 5 angedeutet ist. Diese kürzeren Meßdauern sind insbesondere bei Mobilfunknetzen erwünscht, um die Meßperioden dann mit geographischen Daten zu korrelieren, um eine geographisch detaillierte Aussage in der Qualität eines Mobilfunksystems zu erhalten.

Wie es bereits angedeutet worden ist, zeigt Fig. 5 die graphische Darstellung des Zeitsignals eines Sprachsignals, gewonnen aus einem realen Telephongespräch. Deutlich ersichtlich sind die sprachaktiven Modulationsteile, also die informationstragenden Abschnitte des Signals, hier gesprochene Sätze, sowie die Sprachpausen dazwischen, also die nicht-informationstragenden Abschnitte. Es sei darauf hingewiesen, daß an der Hörerseite des einen Endes der aktuellen Kommunikation das in Fig. 5 gezeigte Signal aufgezeichnet worden ist. Wie es ausgeführt worden ist, treten in einer Konversation deutlich längere Pausen auf, in denen die gegenüberliegende Person spricht. Diese sind zur Vereinfachung in Fig. 5 vernachlässigt.

In Fig. 5 dargestellt sind zwei mögliche Fragmentierungen, basierend auf einer Einteilung in feste Zeitabschnitte. Es ist deutlich zu sehen, daß ein Zeitabschnitt inmitten der Modulation, also eines Wortes oder Satzes, beginnen kann (a(2), b(2)) oder enden kann (a(1), a(2), ..., b(1)).

Darüber hinaus kann es ebenso passieren und wird es insbesondere bei einem Dialog der Fall sein, daß ein Testsignalabschnitt zu einem wesentlichen Teil oder ganz aus einer Pause bestehen kann, wie es beispielsweise teilweise anhand des Testsignalabschnitts a(2) ersichtlich ist, der bereits zu einem Drittel aus Pause besteht.

Die Einteilung in feste Zeitabschnitte eines zu beurteilenden Audiosignals wird somit den Anforderungen an hörtestgerechte Sequenzen, also Sprachbeispiele mit typischerweise zwei Sätzen von maximal 20 Sekunden Dauer nicht gerecht. Ferner ist es wünschenswert, daß solche hörtestgerechten Sequenzen idealerweise mit Pausen beginnen, mit Pausen enden und insbesondere, wenn aufeinanderfolgende Testsignalabschnitte betrachtet werden, auch durch Pausen getrennt sind.

Darüber hinaus führt das "harte" Ein- und Ausschalten in Modulationsteilen, wie beispielsweise das harte Ausschalten des informationstragenden Abschnitts im Testsignalabschnitt a(1), zu Störgeräuschen, die auch als spektrale Störgeräusche bzw. "Knacken" bezeichnet werden. Signaltheoretisch bedeutet das harte Abschneiden eines Modulationsteils die Faltung des Signals mit einer Sprungfunktion. Diese Störgeräusche bzw. Artefakte würden von einem Meßverfahren als Störung ausgewertet werden, was unmittelbar dazu führen würde, daß beispielsweise eine Kommunikationsverbindung schlechter beurteilt wird, als sie ist.

Die EP 1 271 470 A1 offenbart ein Verfahren und eine Vorrichtung zum Bestimmen einer Sprachqualitätsverschlechterung eines Signals, ohne dass irgendeine Referenz oder ein spezielles Signal verwendet wird. Gemäß einem Segmentierungsalgorithmus wird das zu analysierende Signal segmentiert, um Sprach-Segmente, Pause-Segmente oder Rausch-Segmente des Signals zu identifizieren. Anhand der Rausch-Segmente oder der Pause-Segmente wird dann eine erste Einschätzung der Sprachqualität durchgeführt, indem der Rauschpegel in diesen Segmenten gemessen wird. Die Sprach-Segmente werden dann einer Qualitätsmessung unterzogen.

Die WO 02/065456 A1 offenbart ein System und ein Verfahren zur Sprachqualitätsmessung. Zunächst wird eine Vorverarbeitung des Audiosignals durchgeführt, und zwar unter Verwendung einer Schaltung zum Unterdrücken des Hintergrundrauschens und unter Verwendung eines Sprachaktivitätsdetektors, der übliche Telefonie-Algorithmen einsetzt. Der Sprachaktivitätsdetektor erzeugt ein Signal, das nur noch Sprache und keine Pausen mehr enthält. Dieses Signal wird dann dem Qualitätsbeurteilungsalgorithmus zugeführt.

Die Aufgabe der vorliegenden Erfindung besteht darin, ein verbessertes Konzept zum Extrahieren eines Testsignalabschnitts aus einem Audiosignal zu schaffen.

Diese Aufgabe wird durch eine Vorrichtung zum Extrahieren gemäß Patentanspruch 1, ein Verfahren zum Extrahieren gemäß Patentanspruch 16, eine Vorrichtung zur Qualitätsmessung nach Patentanspruch 17, ein Verfahren zur Qualitätsmessung nach Patentanspruch 19 oder ein Computer-Programm gemäß Patentanspruch 20 gelöst.

Der vorliegenden Erfindung liegt die Erkenntnis zugrunde, daß zur Extraktion eines Testsignalabschnitts zunächst die zeitliche Struktur des Audiosignals analysiert werden muß, um einen informationstragenden Abschnitt des Audiosignals von einem vorhergehenden nicht-informationstragenden Abschnitt des Audiosignals und einem nachfolgenden nicht-informationstragenden Abschnitt des Audiosignals zu unterscheiden. Auf der Basis der Analyse des Audiosignals im Hinblick auf die Detektion der informationstragenden Abschnitte wird dann ein Testsignalabschnitt basierend auf dem informationstragenden Abschnitt des Audiosignals erzeugt. Damit wird von dem Prozedere der festen Aufteilung in angrenzende Signalabschnitte weggegangen. Testsignalabschnitte werden erfindungsgemäß nunmehr dahingehend gewonnen, daß das Audiosignal einer Signalanalyse im Hinblick auf seine zeitliche Struktur und im Hinblick auf seinen Informationsgehalt unterzogen wird, um basierend auf den so gewonnenen Erkenntnissen für die weitere Verarbeitung Signalausschnitte, also Testsignalabschnitte zu gewinnen, die denen von hörtestkonformen Testsequenzen weitgehend entsprechen. Die erfindungsgemäße Fragmentierung des Audiosignals in Testsignalabschnitte wird daher nicht signalunabhängig sondern signalangepaßt vorgenommen.

Ein Vorteil der vorliegenden Erfindung besteht darin, daß die Audiosignal-adaptive Extraktion eines Testsignalabschnitts dazu führt, daß systemimmanente Artefakte vermieden werden. Statt dessen werden hörtestkonforme Testsignalabschnitte gewonnen, die die Anwendung und Verbreitung von nicht-intrusiven Meßkonzepten überhaupt erst ermöglichen.

Ein weiterer Vorteil der vorliegenden Erfindung besteht darin, daß keine DUT-Modifikationen bzw. Referenzsignale erforderlich sind, sondern daß das erfindungsgemäße Konzept aus realen Audiosignalen Testsignalabschnitte erzeugt, die im Hinblick auf ihre typischerweise durch Hörtests vorgegebenen Kriterien in weiten Grenzen manipulierbar sind.

Bei einem bevorzugten Ausführungsbeispiel der vorliegenden Erfindung findet die Analyse des Audiosignals durch eine Sprachaktivitätserkennung, eine Pausendetektion bzw. Rauschdetektion oder eine nachgeschaltete Spracherkennung statt.

Der Testsignalabschnitt kann, sofern die zeitlichen Längen ausreichend sind, einen kompletten informationstragenden Abschnitt des Audiosignals unmittelbar enthalten. Je nach Ausführungsform kann jedoch auch eine Manipulation an einem informationstragenden Abschnitt des Audiosignals vorgenommen werden, um beispielsweise Pausen am Beginn und am Ende eines informationstragenden Abschnitts hinzuzufügen, um eine vordefinierte Relation von z. B. Sprachmodulation zu z. B. Pause zu erzeugen.

Durch Bereitstellung eines vorbestimmten Minimalwerts für die zeitliche Länge des Testsignalabschnitts und eines vorgegebenen Maximalwerts für die zeitliche Länge eines Testsignalabschnitts ist es bei einem bevorzugten Ausführungsbeispiel der vorliegenden Erfindung möglich, auch aus längeren informationstragenden Abschnitten vorzugsweise durch langsames Ein- und Aus-Blenden dennoch Hörtest-konforme Testsignalabschnitte zu erzeugen, die im wesentlichen artefaktfrei sind, da das unnatürliche schnelle Ein- bzw. Ausschalten eines informationstragenden Abschnitts verschleiert ist.

Die vorliegende Erfindung ist insbesondere dahingehend vorteilhaft, dass sie ein beliebiges Audiosignal, das typischerweise lange Pausen hat, in eine Folge von Testsignalabschnitten umformt, von denen jede zu einem spezifizierbaren Minimalanteil aus einen informationstragenden Abschnitt des Audiosignals besteht. Damit werden gewissermaßen automatisch die üblichen langen Pausen herausgeschnitten. Eine Qualitätsbeurteilung des Übertragungskanals, von dem das Audiosignal stammt, führt diese Qualitätsbeurteilung dann nur mit sinnvollen Testsignalabschnitten durch und vergeudet nicht sinnlose Ressourcen durch den vergeblichen Versuch einer Qualitätsbeurteilung von Pausen eines Teilnehmers in beispielsweise einen Telephongespräch.

Bevorzugte Ausführungsbeispiele der vorliegenden Erfindung werden nachfolgend Bezug nehmend auf die beiliegenden Zeichnungen detailliert erläutert. Es zeigen:

Fig. 1 ein Blockschaltbild einer Vorrichtung zum Extrahieren eines Testsignalabschnitts gemäß einem bevorzugten Ausführungsbeispiel der vorliegenden Erfindung;

Fig. 2 eine schematische Darstellung der Einrichtung zum Analysieren von Fig. 1 gemäß einem bevorzugten Ausführungsbeispiel der vorliegenden Erfindung;

Fig. 3 eine detaillierte Darstellung der Einrichtung zum Erzeugen von Fig. 1 gemäß einem bevorzugten Ausführungsbeispiel der vorliegenden Erfindung;

Fig. 4 eine Darstellung der Fragmentierung eines Audiosignals, wie sie durch die vorliegende Erfindung erreicht wird;

Fig. 5 eine Fragmentierung des Audiosignals in Testsignalabschnitte gleicher Länge; und

Fig. 6 ein Übersichtsdiagramm zur Erläuterung der prinzipiellen Funktionsweise eines intrusiven Hörtests zur Qualitätsbeurteilung eines zu testenden Systems.

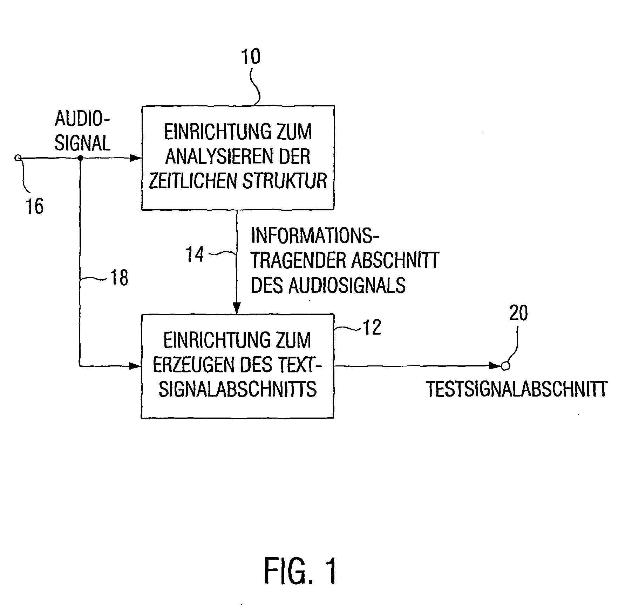

Fig. 1 zeigt ein bevorzugtes Ausführungsbeispiel einer erfindungsgemäßen Vorrichtung zum Extrahieren eines Testsignalabschnitts aus einem Audiosignal. Das Audiosignal wird einer Einrichtung 10 zum Analysieren einer zeitlichen Struktur des Audiosignals zugeführt. Die Einrichtung 10 zum Analysieren der zeitlichen Struktur des Audiosignals ist wirksam, um einen informationstragenden Abschnitt des Audiosignals von einem vorhergehenden nicht-informationstragenden Abschnitt des Audiosignals und einem nachfolgenden nicht-informationstragenden Abschnitt des Audiosignals zu unterscheiden. Der Einrichtung 10 nachgeordnet ist eine Einrichtung 12 zum Erzeugen des Testsignalabschnitts, der vorzugsweise hörtestkonform ist, basierend auf dem informationstragenden Abschnitt des Audiosignals, der bei einer Alternative über eine Verbindungsleitung 14 von der Einrichtung 10 bereitgestellt wird. Alternativ kann die Einrichtung 10 auch ausgebildet sein, um einen Hinweis darauf auszugeben, wo in einem Audiosignal ein informationstragender Abschnitt beginnt, und wo er endet, beispielsweise durch Angabe der Samples, wenn das Audiosignal in zeitdiskreter Form vorliegt, oder durch Angabe von absoluten Zeitpunkten. In einem solchen Fall ist die Einrichtung 12 zum Erzeugen des Testsignalabschnitts basierend auf dem informationstragenden Abschnitt des Audiosignals wirksam, um unter Verwendung der entsprechenden Hinweise auf der Leitung 14 den entsprechenden informationstragenden Abschnitt bzw. zumindest einen Teil des informationstragenden Abschnitts direkt aus dem Audiosignal, das über einen Eingang 16 bereitgestellt wird, zu extrahieren, wie es durch eine Verbindungsleitung vom Eingang 16 zur Einrichtung 12, die in Fig. 1 mit 18 bezeichnet ist, dargestellt ist. Wie es ausgeführt worden ist, erzeugt die Einrichtung 12 an einem Ausgang 20 der in Fig. 1 gezeigten Vorrichtung eine Sequenz von Testsignalabschnitten.

Fig. 4 zeigt die Wirkungsweise des anhand von Fig. 1 dargestellten erfindungsgemäßen Konzepts. Die Einrichtung 10 zum Analysieren ist wirksam, um den informationstragenden Abschnitt, der sich etwa von 1,3 Sekunden bis zu 8,8 Sekunden erstreckt, zu erkennen. Zur Untersuchung des Audiosignals im Hinblick auf einen informationstragenden Abschnitt und einen nicht-informationstragenden Abschnitt, beispielsweise eine Pause oder ein Rauschen, existieren in der Technik viele bekannte Maßnahmen, wie beispielsweise eine Sprachaktivitätserkennung, Prädiktionsverfahren, Pausendetektionsverfahren, Pegelerkennungen, Gradientenverfahren etc. Alle diese Verfahren basieren darauf, eine schnelle Veränderung der Signalamplitude von einer langsamen Veränderung der Signalamplitude unter Berücksichtigung der absoluten Änderung über einen bestimmen Zeitraum zu untersuchen. Schnelle Änderungen, die zusätzlich bei einer bestimmten Amplitude, also bei einem bestimmten Lautheitspegel stattfinden, deuten auf sogenannte sprachaktive Modulationsanteile hin, wenn das Signal ein Sprachsignal ist, wie es in Fig. 4 dargestellt ist. Dagegen deuten langsame Änderungen auf niedrigem Pegelniveau bzw. schnelle Änderungen auf einem relativ konstanten Pegelniveau auf Pausen bzw. auf Rauschen hin, also auf nicht-informationstragende Abschnitte des Audiosignals. Andere Verfahren unterscheiden z. B. Rauschen von Sprache durch Spektralanalyse und Korrelation.

Die Einrichtung 12 zum Erzeugen der Testsignalabschnitte ist nunmehr wirksam, um beispielsweise die Fragmentierung des Audiosignals in Testsignalabschnitte m(1), m(2), m(3), ..., so durchzuführen, daß einem informationstragenden Abschnitt ein nicht-informationstragender Abschnitt vorausgeht und nachfolgt, wie es beispielsweise anhand der Testsignalabschnitte m(1), m(2), m(3) in Fig. 4 zu sehen ist. Im einzelnen ist die Einrichtung zum Erzeugen des Testsignalabschnitts, wie es in Fig. 1 bei 12 dargestellt ist, wirksam, um einen informationstragenden Abschnitt des Audiosignals unmittelbar aus dem Audiosignal zu extrahieren und zumindest einen Teil des vorhergehenden nicht-informationstragenden Abschnitts des Audiosignals und einen Teil des nachfolgenden nicht-informationstragenden Abschnitts hinzuzufügen, um einen Testsignalabschnitt mit einer bestimmten vordefinierten Länge zu erhalten.

Dieses Prozedere ist dann gangbar, wenn der informationstragende Abschnitt des Audiosignals kürzer als eine vorgegebene Maximallänge eines Testsignalabschnitts ist, also z. B. 12 Sekunden oder bis zu 20 Sekunden. Diese Randbedingung dürfte insbesondere bei Sprachsignalen, wie sie über Telephonverbindungen auftreten, der Fall sein.

Ist das Audiosignal jedoch ein Musiksignal, so kann durchaus der Fall auftreten, daß ein informationstragender Abschnitt des Musiksignals, also ein Abschnitt mit einer Modulation oberhalb eines bestimmten Modulationsschwellwerts länger als die vorbestimmte Maximallänge ist. Ist dies der Fall, so ist die Einrichtung 12 zum Erzeugen des Testsignalabschnitts wirksam, um einen Testsignalabschnitt dahingehend zu erzeugen, daß zunächst ausgehend von einer Pausen-Situation der informationstragende Abschnitt nach und nach eingeblendet wird, dahingehend, daß eine Dämpfung schrittweise von 1 auf 0 reduziert wird. Dann wird der informationstragende Abschnitt unmittelbar aus dem Audiosignal übernommen, und zwar bis zu einem vorbestimmten Zeitpunkt, bei dem dann wieder eine langsame schrittweise Ausblendung stattfindet, indem ein Dämpfungsfaktor wieder von 0 auf 1 erhöht wird, um schließlich, am Ende des Testsignalabschnitts wieder eine Pausensituation künstlich herzustellen, also zu synthetisieren.

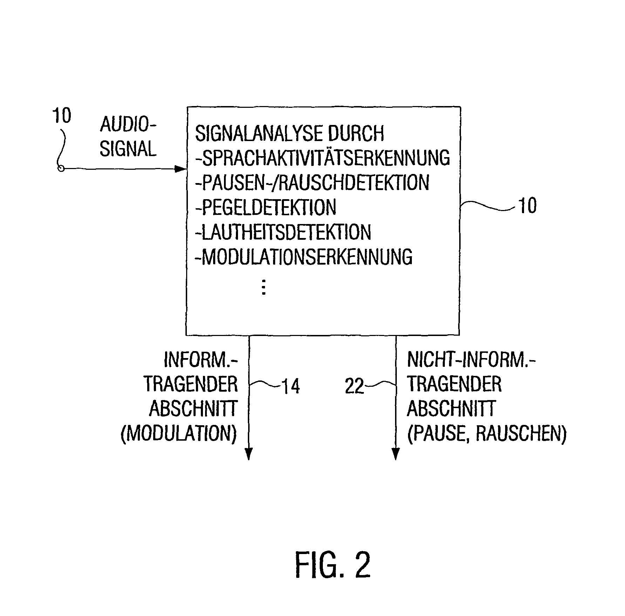

Nachfolgend wird Bezug nehmend auf Fig. 2 eine detailliertere Darstellung der Einrichtung 10 zum Analysieren gegeben. Wieder erhält die Einrichtung 10 zum Analysieren das Audiosignal von einem Audiosignaleingang 10. Ausgangsseitig liefert die Signalanalyseeinrichtung 10 einen Hinweis auf den informationstragenden Abschnitt oder den informationstragenden Abschnitt selbst. Alternativ oder zusätzlich liefert die Einrichtung 10 einen Hinweis auf einen nicht-informationstragenden Abschnitt oder den nicht-informationstragenden Abschnitt selbst, wie es durch einen Ausgangsleitung 22 dargestellt ist. Die Signalanalyseeinrichtung 10 führt bei bevorzugten Ausführungsbeispielen der vorliegenden Erfindung eine Signalanalyse mittels einer Sprachaktivitätserkennung, einer Pausen/Rauschdetektion, einer Pegeldetektion, einer Lautheitsdetektion, einer Modulationserkennung, etc. durch. Alle diese Konzepte basieren darauf, daß ein informationstragender Abschnitt mit dem zu detektierenden Merkmal dahingehend korreliert ist, daß das Merkmal detektierbar ist, wenn der Abschnitt des Audiosignals Nutzinformationen trägt, und daß das zu detektierende Merkmal nicht vorhanden ist, wenn der Abschnitt des Audiosignals, der betrachtet wird, nicht entsprechende Nutzinformationen trägt, oder umgekehrt. Liegt das Audiosignal beispielsweise als Sprachsignal vor, so ist die Einrichtung zur Signalanalyse wirksam, um mittels einer Sprachaktivitätserkennung ("Voice Activity Detection") den Beginn und das Ende eines informationstragenden Abschnitts des Audiosignals, also z. B. eines sprachaktiven Modulationsanteils zu bestimmen. Alternativ oder zusätzlich kann die Signalanalyseeinrichtung 10 eine Pausendetektion bzw. bei realen Netzen eine Rauscherkennung ("Noise Detection") durchführen, um die Lage und Länge der Sprachpausen zu bestimmen.

Ein informationstragender Abschnitt ist dann der Abschnitt zwischen zwei Sprachpausen, obgleich er nicht direkt detektiert wird, sondern gewissermaßen indirekt, indem die vorhergehende und die nachfolgende Sprachpause ermittelt werden. Eine Pausendetektion allein, also eine Detektion von einem vorhergehenden und einem nachfolgenden nicht-informationstragenden Abschnitt bezüglich eines betrachteten informationstragenden Abschnitts liefert somit ebenfalls eine Unterscheidung des informationstragenden Abschnitts des Audiosignals von einem vorhergehenden nicht-informationstragenden Abschnitt des Audiosignals und einem nachfolgenden nicht-informationstragenden Abschnitt des Audiosignals.

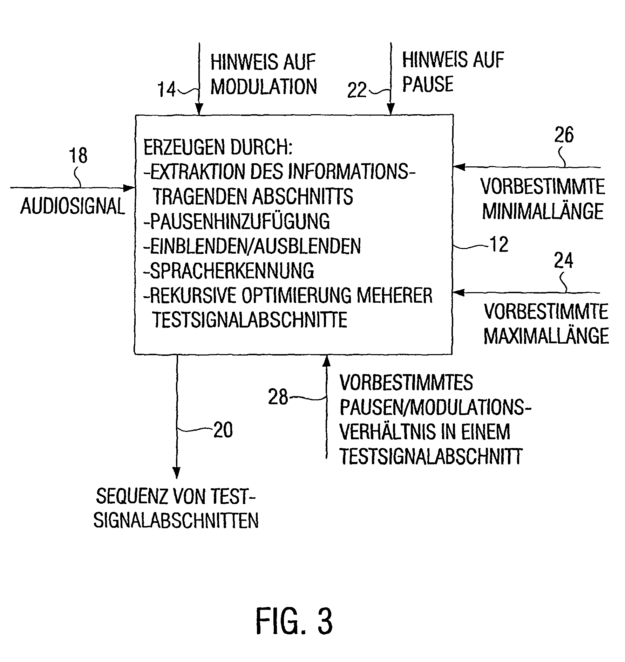

Alternativ oder zusätzlich kann die Einrichtung zur Analyse des Audiosignals ausgebildet sein, um mittels einer nachgeschalteten Spracherkennung, die in der Technik auch als ASR oder "Automatic Speech Recognition" bekannt ist, die Sprache sowie die Satzzusammenhänge zu analysieren, um beispielsweise, wenn dies gefordert ist, immer einen Testsignalabschnitt mit einer vorgegebenen Anzahl von Worten bzw. einer vorgegebenen Anzahl von Sätzen zu extrahieren. Diese Funktionalität kann auch, wie es anhand von Fig. 3 dargestellt ist, von der Einrichtung 12 zum Erzeugen der Testsignalabschnitte übernommen werden, die gemäß einem bevorzugten Ausführungsbeispiel der vorliegenden Erfindung in Fig. 3 dargestellt ist. Über Leitungen 14 bzw. 22 von Fig. 2 erhält die Einrichtung 12 zum Erzeugen eines Testsignalabschnitts z. B. einen Hinweis auf einen informationstragenden Abschnitt also auf eine Modulation bzw. einen Hinweis auf eine Pause, also einen nicht-informationstragenden Abschnitt des Audiosignals, das über die Leitung 18 der Einrichtung 12 bereitgestellt wird. Die Einrichtung 12 erhält ferner Informationen über eine vorbestimmte Maximallänge über einen weiteren Eingang 24 sowie Informationen über eine vorbestimmte Minimallänge über einen weiteren Eingang 26. Ferner wird bei einem bevorzugten Ausführungsbeispiel der vorliegenden Erfindung ein vorbestimmtes Pausen/Modulationsverhältnis in einem Testsignalabschnitt angestrebt. Die Informationen, welches Pausen/Modulationsverhältnis vorbestimmt ist, können über einen weiteren Eingang 28 der Einrichtung 12 zum Erzeugen der Testsignalabschnitte zugeführt werden.

Die Einrichtung 12 zum Erzeugen eines Testsignalabschnitts ist wirksam, um Pausen zu Beginn und zu Ende eines identifizierten informationstragenden Abschnitts hinzuzufügen, um eine definierte Relation von Sprachmodulation zu Pause, wie beispielsweise 40% Sprachmodulation und 60% Pause zu erzeugen. Sollte ein informationstragender Abschnitt zu lang sein, so ist die Einrichtung 12 bei einem bevorzugten Ausführungsbeispiel der vorliegenden Erfindung wirksam, um eine Ein- und Ausblendefunktionalität zu schaffen, um den informationstragenden Abschnitt sanft ein- oder auszublenden, was in der Technik auch als "Fade-In" oder "Fade-Out" bekannt ist. Ist ein informationstragender Abschnitt des Audiosignals zwar nicht so lang wie die vorbestimmte Maximallänge, ist sie jedoch länger, als durch das vorbestimmte Pausen/Modulationsverhältnis in einem Testsignalabschnitt vorgegeben ist, so kann die Ein/Ausblendefunktionalität auch vorgenommen werden, um den informationstragenden Abschnitt zugunsten eines längeren nicht-informationstragenden Abschnitts zu "verkürzen".

Bei einem bevorzugten Ausführungsbeispiel der vorliegenden Erfindung wird ferner eine rekursive Abarbeitung der Schritte der Sprachaktivitätskennung, der Pausendetektion, der nachgeschalteten Spracherkennung und der Hinzufügung von Pausen durchgeführt, um Hörtest-konforme Testsignalabschnitte, die beispielsweise Sprachsequenzen sein werden, mit unterschiedlicher Länge zu bilden, deren jeweilige Dauer jedoch innerhalb der vorgegebenen Minimallänge $t_{min}$ und der vorgegebenen Maximallänge $t_{max}$ liegt.

Das erfindungsgemäße Konzept ist somit wirksam, um zu jedem Audiosignal der Dauer t eine Reihe von i Testsignalabschnitten zu erzeugen, wobei gilt:

$$0 \leq i \leq \frac{t}{t_{min}}$$

wobei $t_{min}$ die vorgegebene Mindestdauer für eine Sequenz definiert.

Die derart erzeugten Testsignalabschnitte bzw. Fragmente des Audiosignals, die, wie es in Fig. 4 dargestellt ist, bei einem bevorzugten Ausführungsbeispiel der vorliegenden Erfindung Überlappungen haben können, werden nunmehr einem weiteren Prozeß, beispielsweise einem Perzeptions-basierten Meßverfahren zur Bestimmung der Sprachqualität gemäß ITU-T P.862 (PESQ) zugeführt. Gleichzeitig können die erzeugten Fragmente auch für einen subjektiven Hörtest gemäß ITU-T P.800 beispielsweise verwendet werden.

Es ist zu sehen, daß die erfindungsgemäß erzeugten Testsignalabschnitte, wie sie in Fig. 4 dargestellt sind, im Gegensatz zu den Testsignalabschnitten konstanter Länge keine Sequenzen mehr enthalten, die ausschließlich eine Pause umfassen, also "Null-Signale" sind, so daß die Anzahl der Sequenzen in Abhängigkeit der Modulation für ein gegebenes Audiosignal minimiert wird und im Extremfall sogar 0 betragen kann, wenn das Audiosignal keinen informationstragenden Abschnitt aufweist, also einzig und allein aus einer Pause bzw. aus Rauschen besteht. Dieses Ergebnis deckt sich mit der Anforderung, daß ein Meßverfahren kein Signal auswerten kann, das ausschließlich aus Rauschen oder Pause besteht.

Nachfolgend wird auf eine Fragmentierung eines Audiosignals in hörtestgerechte Testsequenzen gemäß ITU-R BS.111.6 bzw. BS.1534 eingegangen.

Analog zur erfindungsgemäßen Fragmentierung eines Sprachsignals in hörtestgerechte Testsequenzen gemäß ITU-T P.800 wird erfindungsgemäß ein Musiksignal ebenfalls in ca. 10 bis 20 s lange Sequenzen fragmentiert. Bei einem bevorzugten Ausführungsbeispiel ist die Einrichtung 10 zum Analysieren ausgebildet, um im Falle eines Musiksignals eine Pegelerkennung, eine Lautheitserkennung oder eine Modulationserkennung durchzuführen, um den Beginn und das Ende von Modulationsanteilen, also eines informationstragenden Abschnitts zu bestimmen. Ferner ist die Einrichtung 10 ausgebildet, um mittels einer Pausendetektion bzw. bei realen Netzen einer Rauscherkennung die Lage und Länge der Pausen, die in der Technik auch als Silence Intervals bezeichnet werden, zu bestimmen.

Wieder wird es bevorzugt, bei einer zu langen Modulation, also einem zu langen informationstragenden Abschnitt gegebenenfalls mittels einer nachgeschalteten Ein- und Ausblendeautomatik das Musiksignal sanft ein- und auszublenden. Ferner wird es bevorzugt, unter Hinzufügung von Pausen zu Beginn und zu Ende eines identifizierten informationstragenden Abschnitts eine definierte Relation von Modulation zu Pause, wie beispielsweise 40:60, zu erzeugen.

Wieder wird bei einem bevorzugten Ausführungsbeispiel der vorliegenden Erfindung eine rekursive Verwendung der Schritte der Pegel-, Lautheits- oder Modulationserkennung, der Pausendetektion, der Ein- und Ausblendeautomatik und der Hinzufügung von Pausen durchgeführt, um Audiosequenzen unterschiedlicher Länge zu bilden, deren Dauer innerhalb vorgegebener Mindest- und Maximallängen $t_{min}$ und $t_{max}$ liegt.

Bezüglich beispielhafter Definition der Lautheit und der Modulation wird auf das Standardisierungsdokument Rec. ITU-R BS.1387-1, Abschnitt 3.2 bezüglich der Modulation und Abschnitt 3.3 bezüglich der Lautheit verwiesen. Diese Abschnitte sind hierin durch Bezugnahme aufgenommen.

Als Ergebnis erhält man wieder zu jedem Audiosignal der Dauer t eine Reihe von i Meßsequenzen, wobei wieder gilt:

$$0 \le i \le \frac{t}{t_{min}}$$

wobei $t_{min}$ die vorgegebenen Mindestdauer für eine Sequenz definiert.

Die derart gewonnenen und aufbereiteten Testsignalabschnitte bzw. Fragmente können jetzt einem weiteren Prozeß, beispielsweise einem perzeptionsbasierten Meßverfahren zur Bestimmung der Audioqualität gemäß ITU-R BS.1387-1 PEAQ zugeführt werden. Gleichzeitig können die erzeugten Fragmente auch für einen subjektiven Hörtest eingesetzt werden.

Bei einem alternativen Ausführungsbeispiel der vorliegenden Erfindung wird es bevorzugt, die gewonnenen aufeinanderfolgenden Testsignalabschnitte einer periodischen Lautheitsmessung bzw. Lautheitskorrektur zu untersuchen, beispielsweise unter Verwendung bekannter Verfahren wie sie in ITU-R WP6P Question 2/6 "Audio Metering Characteristics suitable for use in Digital Sound Production" definiert sind. Dieses Konzept dient insbesondere dazu, eine Lautheitsanpassung von Tonsignalen beispielsweise im Fernsehen zu schaffen, um das unter dem Stichwort "zu laute Werbung" bekannte Problem von Pegelschwankungen bei Tonsignalen anzugehen. Das erfindungsgemäße Konzept ist hier insbesondere dahingehend vorteilhaft, daß insbesondere das Pausen/Modulations-Verhältnis der Testsignalabschnitte aufgrund der signaladaptiven Extraktion der Testsignalabschnitte gemäß der vorliegenden Erfindung genau steuerbar ist, also daß keine falschen Lautheitsbeeinflussungen des Tons aufgrund einer ungenauen Audiosignalfragmentierung auftreten.

Abhängig von den Gegebenheiten kann das erfindungsgemäße Verfahren zum Extrahieren eines Testsignalabschnitts in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, daß das Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens zum Extrahieren eines Testsignalabschnitts aus einem Audiosignal realisiert werden, wenn das Computer-Programm auf einem Computer abläuft.

**Patentansprüche**

1. Vorrichtung zum Extrahieren eines Testsignalabschnitts aus einem Audiosignal, mit folgenden Merkmalen:

　　einer Einrichtung (10) zum Analysieren einer zeitlichen Struktur des Audiosignals, um einen informationstragenden Abschnitt des Audiosignals von einem vorhergehenden nicht-informationstragenden Pausenanteil des Audiosignals und einem nachfolgenden nicht-informationstragenden Pausenanteil des Audiosignals zu unterscheiden;

einer Einrichtung (12) zum Erzeugen einer Sequenz von Testsignalabschnitten basierend auf dem informationstragenden Abschnitt des Audiosignals; und

einer Einrichtung (20) zum Übermitteln des Testsignalabschnitts an eine Messvorrichtung zur Qualitätsbeurteilung eines Übertragungssystems (600), aus dem das Audiosignal erhaltbar ist,

wobei die Einrichtung (12) zum Erzeugen ausgebildet ist, um dem informationstragenden Abschnitt des Audiosignals einen oder mehrere Pausenabschnitte hinzuzufügen, so dass der Testsignalabschnitt ein vorbestimmtes Verhältnis von zeitlicher Länge des informationstragenden Abschnitts und zeitlicher Länge des bzw. der Pausenabschnitte aufweist.

2. Vorrichtung nach Anspruch 1, bei der das Audiosignal Sprachanteile und die Pausenanteile zwischen den Sprachanteilen aufweist, und bei der die Einrichtung (10) zum Analysieren ausgebildet ist, um eine Sprachaktivitätserkennung durchzuführen, um einen Sprachanteil als informationstragenden Abschnitt zu erfassen, der in zeitlicher Hinsicht zwischen zwei Pausenanteilen als nicht-informationstragenden Abschnitten angeordnet ist.

3. Vorrichtung nach Anspruch 1 oder 2, bei der das Audiosignal Signalanteile mit einer vorbestimmten Minimalleistung und Pausenanteile mit einer Leistung kleiner als die vorbestimmte Signalleistung aufweist, und bei der die Einrichtung (10) zum Analysieren ausgebildet ist, um eine Pausendetektion durchzuführen, um zwei zeitlich folgende Pausenanteile zu detektieren, zwischen denen als informationstragender Abschnitt ein Signalanteil angeordnet ist.

4. Vorrichtung nach einem der vorhergehenden Ansprüche,
bei der das Audiosignal Rauschanteile und dazwischenliegende Signalanteile aufweist, und bei der die Einrichtung (10) zum Analysieren ausgebildet ist, um eine Rauscherkennung durchzuführen, um zwei zeitlich folgende Rauschanteile zu erfassen, um einen zwischen den Rauschanteilen liegenden Signalanteil als informationstragenden Abschnitt zu ermitteln.

5. Vorrichtung nach Anspruch 2,
bei der die Einrichtung (10) zum Analysieren ferner ausgebildet ist, um den Sprachanteil einer Spracherkennung zu unterziehen, und den informationstragenden Abschnitt hinsichtlich einer Sprache und/oder eines Satzzusammenhangs zu analysieren, und
bei der die Einrichtung (12) zum Erzeugen ausgebildet ist, um beim Erzeugen des Testsignalabschnitts die Sprache und/oder den Satzzusammenhang zu berücksichtigen.

6. Vorrichtung nach einem der vorhergehenden Ansprüche,
bei der die Einrichtung (12) zum Erzeugen ausgebildet ist, um den Testsignalabschnitt so zu erzeugen, daß derselbe eine zeitliche Länge hat, die größer oder gleich einer vorbestimmten Minimallänge und kleiner oder gleich einer vorbestimmten Maximallänge ist.

7. Vorrichtung nach Anspruch 6, bei der die vorbestimmte Minimallänge zwischen 2 und 12 Sekunden liegt, und bei der die vorbestimmte Maximallänge zwischen 12 und 25 Sekunden liegt.

8. Vorrichtung nach einem der vorhergehenden Ansprüche,
bei der die Einrichtung (12) zum Erzeugen ausgebildet ist, um zumindest einen Teil des informationstragenden Abschnitts des Audiosignals unverändert in den Testsignalabschnitt zu übernehmen.

9. Vorrichtung nach einem der vorhergehenden Ansprüche,
bei der die Einrichtung (12) zum Erzeugen ausgebildet ist,
um eine zeitliche Länge des informationstragenden Abschnitts zu erfassen,
um festzustellen, ob die zeitliche Länge einen vorbestimmten Maximalwert überschreitet, und
um in dem Fall des Überschreitens des vorbestimmten Maximalwerts einen Teil am Anfang oder am Ende des informationstragenden Abschnitts auszublenden, um einen modifizierten informationstragenden Abschnitt zu erhalten, dessen zeitliche Länge kleiner als der vorbestimmte Maximalwert ist, und
um in einem Übergangsbereich zwischen einem ausgeblendeten Abschnitt und einem nicht-modifizierten Abschnitt eine kontinuierliche Pegeländerung des modifizierten informationstragenden Abschnitts zu erhalten, und
um den Testsignalabschnitt so zu erzeugen, daß derselbe den Übergangsbereich und den nicht-modifizierten Abschnitt umfaßt.

10. Vorrichtung nach einem der Ansprüche 1 bis 8, bei der die Einrichtung (12) zum Erzeugen ausgebildet ist, um in dem Fall, in dem die zeitliche Länge des informationstragenden Abschnitts kleiner als eine vorbestimmte Maximallänge ist, den gesamten informationstragenden Abschnitt in den Testsignalabschnitt zu übernehmen.

11. Vorrichtung nach einem der vorhergehenden Ansprüche,
bei der die Einrichtung (12) zum Erzeugen ausgebildet ist, um zwei aufeinanderfolgende Testsignalabschnitte zu erzeugen, wobei ein Endpunkt eines ersten Testsignalabschnitts bezogen auf das Audiosignal zeitlich nach einem Startpunkt eines nachfolgenden zweiten Testsignalabschnitts ist, so daß sowohl der erste Testsignalabschnitt als auch der zweite Testsignalabschnitt zumindest einen Teil eines nicht-informationstragenden Abschnitts des Audiosignals gemeinsam haben.

12. Vorrichtung nach einem der vorhergehenden Ansprüche,
bei der die Einrichtung (10) zum Analysieren und die Einrichtung (12) zum Erzeugen ausgebildet sind, um das Audiosignal in eine Folge von Testsignalabschnitten unterschiedlicher Länge umzusetzen, wobei jeder Testsignalabschnitt länger als oder gleich einer vorbestimmten Minimallänge und kürzer als oder gleich einer vorbestimmten Maximallänge ist.

13. Vorrichtung nach einem der vorhergehenden Ansprüche,
bei der die Einrichtung (10) zum Analysieren ausgebildet ist, um eine Benachrichtigung auszugeben, wenn in dem Audiosignal kein informationstragender Abschnitt detektierbar ist.

14. Vorrichtung nach Anspruch 1, bei der das Audiosignal einen Musikanteil aufweist, und
bei der die Einrichtung (10) zum Analysieren ausgebildet ist, um eine Pegelerkennung, eine Lautheitserkennung oder eine Modulationserkennung durchzuführen, um einen nicht-informationstragenden Abschnitt von einem informationstragenden Abschnitt zu unterscheiden.

15. Vorrichtung nach einem der vorhergehenden Ansprüche,
bei der die Einrichtung (12) zum Erzeugen ausgebildet ist, um eine Sequenz von Testsignalabschnitten zu erzeugen, und die ferner eine Einrichtung zur Lautheitsmessung aufweist, um für jeden Testsignalabschnitt einen Lautheitswert zu erhalten, wobei die Lautheitswerte der Testsignalabschnitte von einer Lautheitsrückkopplung verwendbar sind, um einen Lautheitsverlauf des Audiosignals rückkopplungsmäßig zu steuern.

16. Verfahren zum Extrahieren eines Testsignalabschnitts aus einem Audiosignal, mit folgenden Schritten:

Analysieren (10) einer zeitlichen Struktur des Audiosignals, um einen informationstragenden Abschnitt des Audiosignals von einem vorhergehenden nicht-informationstragenden Pausenanteil des Audiosignals und einem nachfolgenden nicht-informationstragenden Pausenanteil des Audiosignals zu unterscheiden;
Erzeugen (12) des Testsignalabschnitts basierend auf dem informationstragenden Abschnitt des Audiosignals; und
Übermitteln des Testsignalabschnitts an eine Messvorrichtung zur Qualitätsbeurteilung eines Übertragungssystems (600), aus dem das Audiosignal erhaltbar ist,
wobei die Erzeugung eine Hinzufügung eines oder mehrerer Pausenabschnitte zu dem informationstragenden Abschnitt des Audiosignals aufweist, so dass der Testsignalabschnitt ein vorbestimmtes Verhältnis von zeitlicher Länge des informationstragenden Abschnitts und zeitlicher Länge des bzw. der Pausenabschnitte aufweist.

17. Vorrichtung zur Qualitätsmessung eines Übertragungskanals, mit folgenden Merkmalen:

einer Einrichtung zum Empfangen eines Audiosignals von dem Übertragungskanal;
einer Einrichtung zum Extrahieren eines oder mehrerer Testsignalabschnitte gemäß einem der Ansprüche 1 bis 15; und
einer Einrichtung zur Qualitätsbeurteilung des Übertragungskanals auf der Basis des einen oder der mehreren Testsignalabschnitte.

18. Vorrichtung nach Anspruch 17,
bei der die Einrichtung zum Extrahieren ausgebildet ist, um das Audiosignal in eine Folge von Testsignalabschnitten unterschiedlicher Länge umzusetzen, wobei jeder Testsignalabschnitt länger als oder gleich einer vorbestimmten Minimallänge und kürzer als oder gleich einer vorbestimmten Maximallänge ist,
wobei jeder Testsignalabschnitt zu zumindest einem vorbestimmten Anteil aus einem informationstragenden Abschnitt des Audiosignals besteht, und
wobei die Einrichtung zur Qualitätsbeurteilung ausgebildet ist, um für Testsignalabschnitte der Folge von Testsignalabschnitten jeweils einen Qualitätsmesswert zu erzeugen.

19. Verfahren zur Qualitätsmessung eines Übertragungskanals, mit folgenden Schritten:

Empfangen eines Audiosignals von dem Übertragungskanal;
Extrahieren eines oder mehrerer Testsignalabschnitte unter Verwendung des Verfahrens gemäß Anspruch 16; und

Qualitätsbeurteilen des Übertragungskanals auf der Basis des einen oder der mehreren Testsignalabschnitte.

20. Computer-Programm mit einem Programmcode zum Durchführen des Verfahrens zum Extrahieren eines Testsignalabschnitts gemäß Patentanspruch 16 oder zum Durchführen des Verfahrens zur Qualitätsmessung gemäß Patentanspruch 19, wenn das Computer-Programm auf einem Computer abläuft.

**Claims**

1. A device for extracting a test signal section from an audio signal, comprising:

    a means (10) for parsing a temporal structure of the audio signal in order to differentiate an information-carrying section of the audio signal from a preceding non-information-carrying pause portion of the audio signal and a subsequent non-information-carrying pause portion of the audio signal; and
    a means (12) for generating a sequence of test signal sections based on the information-carrying section of the audio signal; and
    a means (20) for transmitting the test signal section to a measurement device for a quality assessment of a transmission system (600) from which the audio signal may be acquired,
    wherein the means (12) for generating is implemented to add one or several pause portions to the information-carrying section of the audio signal, so that the test signal section comprises a predetermined ratio of the temporal length of the information-carrying section and the temporal length of the one or the several pause portions.

2. The device according to claim 1, wherein the audio signal comprises voiced portions and pause portions between the voiced portions, and wherein means (10) for parsing is implemented to perform a voice activity detection in order to detect a voiced portion as an information-carrying section arranged in temporal respect between two pause portions as non-information-carrying sections.

3. The device according to claim 1 or 2, wherein the audio signal comprises signal portions having a predetermined minimum power and pause portions having a power less than the predetermined signal power, and wherein the means (10) for parsing is implemented to perform a pause detection to detect two pause portions subsequent in time between which a signal portion is arranged as an information-carrying section.

4. The device according to one of the preceding claims, wherein the audio signal comprises noise portions and intermediate signal portions, and wherein the means (10) for parsing is implemented to perform a noise detection in order to detect two noise portions subsequent in time in order to determine a signal portion lying between the noise portions as an information-carrying section.

5. The device according to claim 2, wherein the means (10) for parsing is further implemented to subject the voiced portion to a voice detection and to parse the information-carrying section with regard to a speech and/or a sentence context, and wherein the means (12) for generating is implemented in order to consider the speech and/or the sentence context when generating the test signal section.

6. The device according to one of the previous claims, wherein the means (12) for generating is implemented to generate the test signal section such that the same has a temporal length which is greater than or equal to a predetermined minimum length and smaller than or equal to a predetermined maximum length.

7. The device according to claim 6, wherein the predetermined minimum length lies between 2 and 12 seconds and wherein the predetermined maximum length lies between 12 and 25 seconds.

8. The device according to one of the previous claims, wherein the means (12) for generating is implemented in order to take over at least a part of the information-carrying section of the audio signal unchanged into the test signal section.

9. The device according to one of the previous claims, wherein the means (12) for generating is implemented to detect a temporal length of the information-carrying section, to determine whether the temporal length exceeds a predetermined maximum value, and in the case of exceeding the predetermined maximum value, to fade out a part at the beginning or at the end of the information-carrying section to obtain a modified information-carrying section whose temporal length is smaller than the predetermined maximum value, and in a transition range between a faded-out portion and a non-modified portion, to obtain a continuous level change of the modified information-carrying section, and to generate the test signal section so that the same includes the transition range and the non-modified section.

10. The device according to one of claims 1 to 8, wherein the means (12) for generating is implemented to take over the complete information-carrying section into the test signal section in the case in which the temporal length of the information-carrying section is smaller than a predetermined maximum length.

11. The device according to one of the previous claims, wherein the means (12) for generating is implemented to generate two subsequent test signal sections, wherein an endpoint of a first test signal section with regard to the audio signal is in time after a starting point of a subsequent second test signal section, so that both the first test signal section and also the second test signal section have at least a part of a non-information-carrying section of the audio signal in common.

12. The device according to one of the previous claims, wherein the means (10) for parsing and the means (12) for generating are implemented to transform the audio signal into a sequence of test signal sections of different length, wherein each test signal section is longer than or equal to a predetermined minimum length and shorter than or equal to a predetermined maximum length.

13. The device according to one of the previous claims, wherein the means (10) for parsing is implemented to output a notification when no information-carrying section is detectable in the audio signal.

14. The device according to claim 1, wherein the audio signal comprises a music portion, and wherein the means (10) for parsing is implemented to perform a level detection, a loudness detection or a modulation detection in order to differentiate a non-information-carrying section from an information-carrying section.

15. The device according to one of the previous claims, wherein the means (12) is implemented for generating, in order to generate a sequence of test signal sections, and further comprises a means for a loudness measurement, in order to obtain a loudness value for each test signal section, wherein the loudness values of the test signal sections may be used by a loudness feedback in order to control a loudness course of the audio signal with regard to feedback.

16. A method for extracting a test signal section from an audio signal, comprising the following steps:

parsing (10) a temporal structure of the audio signal in order to differentiate an information-carrying section of the audio signal from a preceding non-information-carrying pause portion of the audio signal or a subsequent non-information-carrying pause portion of the audio signal; and
generating (12) the test signal section based on the information-carrying section of the audio signal;
transmitting the test signal section to a measurement device for a quality assessment of a transmission system (600) from which the audio signal may be acquired,
wherein generating comprises adding one or several pause portions to the information-carrying section of the audio signal, so that the test signal section comprises a predetermined ratio of the temporal length of the information-carrying section and the temporal length of the one or several pause portions.

17. A device for a quality measurement of a transmission channel, comprising:

a means for receiving an audio signal from the transmission channel;
an means for extracting one or several test signal sections according to one of claims 1 to 15; and
a means for a quality assessment of the transmission channel on the basis of the one or the several test signal sections.

18. The device according to claim 17, wherein the means for extracting is implemented to convert the audio signal into a sequence of test signal sections of different length, wherein each test signal section is longer than or equal to a predetermined minimum length and shorter than or equal to a predetermined maximum length, wherein each test signal section, to at least a predetermined amount, consists of an information-carrying section of the audio signal, and wherein the means for quality assessment is implemented in order to generate, for test signal sections of the sequence of test signal sections, a quality measurement value each.

19. A method for a quality measurement for a transmission channel, comprising the following steps:

receiving an audio signal from the transmission channel;
extracting one or several test signal sections using the method according to claim 16; and
assessing the quality of the transmission channel on the basis of the one or several test signal sections.

**20.** A computer program having a program code for performing, when the computer program runs on a computer, the method for extracting a test signal section according to claim 16 or the method for a quality measurement according to claim 19.

**Revendications**

**1.** Dispositif permettant d'extraire un segment de signal de test d'un signal audio, aux caractéristiques suivantes:

> un moyen (10) destiné à analyser une structure temporelle du signal audio, pour différencier un segment porteur d'informations du signal audio d'une part de pause non porteuse d'informations précédente du signal audio et d'une part de pause non porteuse d'informations suivante du signal audio;
> un moyen (12) destiné à générer une séquence de segments de signal de test sur base du segment porteur d'informations du signal audio; et
> un moyen (20) destiné à transmettre le segment de signal de test à un dispositif de mesure pour l'évaluation de qualité d'un système de transmission (600) duquel peut être obtenu le signal audio,
> le moyen (12) destiné à générer étant réalisé pour ajouter au segment porteur d'informations du signal audio un ou plusieurs segments de pause, de sorte que le segment de signal de test présente un rapport prédéterminé de longueur dans le temps du segment porteur d'informations et de longueur dans le temps du ou des segments de pause.

**2.** Dispositif selon la revendication 1, dans lequel le signal audio présente des parts de parole et des parts de pause entre les parts de parole, et dans lequel le moyen (10) destiné à analyser est réalisé pour effectuer une reconnaissance d'activité de parole, pour saisir une part de parole comme segment porteur d'informations qui est disposé, en ce qui concerne le temps, entre deux parts de pause comme segments non porteurs d'informations.

**3.** Dispositif selon la revendication 1 ou 2, dans lequel le signal audio présente des parts de signal à puissance minimale prédéterminée et des parts de pause à puissance inférieure à la puissance de signal prédéterminée, et dans lequel le moyen (10) destiné à analyser est réalisé pour effectuer une détection de pause, pour détecter deux parts de pause successives dans le temps entre lesquelles est disposée, comme segment porteur d'informations, une part de signal.

**4.** Dispositif selon l'une des revendications précédentes, dans lequel le signal audio présente des parts de bruit et des parts de signal situées entre ces dernières, et dans lequel le moyen (10) destiné à analyser est réalisé pour effectuer une identification de bruit, pour saisir deux parts de bruit successives dans le temps, pour déterminer comme segment porteur d'informations une part de signal située entre les parts de bruit.

**5.** Dispositif selon la revendication 2, dans lequel le moyen (10) destiné à analyser est par ailleurs réalisé pour soumettre la part de parole à une reconnaissance de parole, et pour analyser le segment porteur d'informations quant à une parole et/ ou un contexte de phrase, et dans lequel le moyen (12) destiné à générer est réalisé pour tenir compte, lors de la génération du segment de signal de test, de la parole et/ou du contexte de phrase.

**6.** Dispositif selon l'une des revendications précédentes, dans lequel le moyen (12) destiné à générer est réalisé pour générer le segment de signal de test de sorte qu'il ait une longueur dans le temps qui est supérieure ou égale à une longueur minimale prédéterminée et inférieure ou égale à une longueur maximale prédéterminée.

**7.** Dispositif selon la revendication 6, dans lequel la longueur minimale prédéterminée se situe entre 2 et 12 secondes, et dans lequel la longueur maximale prédéterminée se situe entre 12 et 25 secondes.

**8.** Dispositif selon l'une des revendications précédentes, dans lequel le moyen (12) destiné à générer est réalisé pour reprendre au moins une partie du segment porteur d'informations du signal audio inchangée dans le segment de signal de test.

**9.** Dispositif selon l'une des revendications précédentes, dans lequel le moyen (12) destiné à générer est réalisé pour saisir une longueur dans le temps du segment porteur d'informations, pour constater si la longueur dans le temps excède une valeur maximale prédéterminée, et pour masquer, en cas de dépassement de la valeur maximale prédéterminée, une partie au début ou à la fin du segment porteur d'informations, pour obtenir un segment porteur d'informations modifié dont la longueur dans le temps est inférieure à la valeur maximale prédéterminée, et pour obtenir, dans une zone de transition entre un segment masqué et un segment non modifié, une modification de niveau continue du segment porteur d'informations modifié, et

pour générer le segment de signal de test de sorte qu'il comporte la zone de transition et le segment non modifié.

10. Dispositif selon l'une des revendications 1 à 8, dans lequel le moyen (12) destiné à générer est réalisé pour reprendre, au cas où la longueur dans le temps du segment porteur d'informations est inférieure à une valeur maximale prédéterminée, tout le segment porteur d'informations dans le segment de signal de test.

11. Dispositif selon l'une des revendications précédentes,

dans lequel le moyen (12) destiné à générer est réalisé pour générer deux segments de signal de test successifs, un point final d'un premier segment de signal de test se situe, par rapport au signal audio, dans le temps après un point de début d'un deuxième segment de signal de test successif, de sorte que tant le premier segment de signal de test que le deuxième segment de signal de test aient en commun au moins une part d'un segment non porteur d'informations du signal audio.

12. Dispositif selon l'une des revendications précédentes,

dans lequel le moyen (10) destiné à analyser et le moyen (12) destiné à générer sont réalisés pour convertir le signal audio en une succession de segments de signal de test de longueur différente, chaque segment de signal de test étant plus long que ou égal à une longueur minimale prédéterminée et plus courte que ou égale à une longueur maximale prédéterminée.

13. Dispositif selon l'une des revendications précédentes,

dans lequel le moyen (10) destiné à analyser est réalisé pour sortir une notification lorsque dans le signal audio ne peut pas être détecté de segment porteur d'informations.

14. Dispositif selon la revendication 1, dans lequel le signal audio présente une part de musique, et dans lequel le moyen (10) destiné à analyser est réalisé pour effectuer une reconnaissance de niveau, une reconnaissance de volume sonore ou une reconnaissance de modulation, pour distinguer un segment non porteur d'informations d'un segment porteur d'informations.

15. Dispositif selon l'une des revendications précédentes,

dans lequel le moyen (12) destiné à générer est réalisé pour générer une séquence de segments de signal de test, et présente par ailleurs un moyen de mesure de volume sonore, pour obtenir, pour chaque segments de signal de test, une valeur de volume sonore, les valeurs de volume sonore des segments de signal de test pouvant être utilisées par un couplage rétroactif de volume sonore, pour régler en couplage rétroactif une évolution de volume sonore du signal audio.

16. Procédé permettant d'extraire un segment de signal de test d'un signal audio, aux étapes suivantes consistant à:

analyser (10) une structure temporelle du signal audio, pour différencier un segment porteur d'informations du signal audio d'une part de pause non porteuse d'informations précédente du signal audio et d'une part de pause non porteuse d'informations suivante du signal audio;

générer (12) le segment de signal de test sur base du segment porteur d'informations du signal audio; et

transmettre le segment de signal de test à un dispositif de mesure pour l'évaluation de qualité d'un système de transmission (600) duquel peut être obtenu le signal audio,

la génération présentant l'ajoute au segment porteur d'informations du signal audio d'un ou plusieurs segments de pause, de sorte que le segment de signal de test présente un rapport prédéterminé de longueur dans le temps du segment porteur d'informations et de longueur dans le temps du ou des segments de pause.

17. Dispositif de mesure de qualité d'un canal de transmission, aux caractéristiques suivantes:

un moyen destiné à recevoir un signal audio du canal de transmission;

un moyen destiné à extraire un ou plusieurs segments de signal de test selon l'une des revendications 1 à 15; et

un moyen destiné à évaluer la qualité du canal de transmission sur base de l'un ou des plusieurs segments de signal de test.

18. Dispositif selon la revendication 17, dans lequel le moyen destiné à extraire est réalisé pour convertir le signal audio en une succession de segments de signal de test de longueur différente, chaque segment de signal de test étant plus long ou égal à une longueur minimale prédéterminée et plus courte que ou égale à une longueur maximale prédéterminée,

chaque segment de signal de test consistant au moins en une part prédéterminée d'un segment porteur d'informations du signal audio, et

le moyen destiné à évaluer la qualité étant réalisé pour générer pour chacun des segments de signal de test de la succession de segments de signal de test, une valeur de mesure de qualité.

19. Procédé de mesure de qualité d'un canal de transmission, aux étapes suivantes consistant à:

recevoir un signal audio du canal de transmission;

extraire un ou plusieurs segments de signal de test à l'aide du procédé selon la revendication 16; et

évaluer la qualité du canal de transmission sur base de l'un ou des plusieurs segments de signal de test.

20. Programme d'ordinateur avec un code de programme pour réaliser le procédé permettant d'extraire un segment de signal de test selon la revendication 16 ou pour réaliser le procédé de mesure de qualité selon la revendication 19 lorsque le programme d'ordinateur est exécuté sur un ordinateur.

AUDIO-
SIGNAL

16

18

10

EINRICHTUNG ZUM
ANALYSIEREN DER
ZEITLICHEN STRUKTUR

14

INFORMATIONS-
TRAGENDER ABSCHNITT
DES AUDIOSIGNALS

12

EINRICHTUNG ZUM
ERZEUGEN DES TEXT-
SIGNALABSCHNITTS

20

TESTSIGNALABSCHNITT

FIG. 1

10   AUDIO-
     SIGNAL                SIGNALANALYSE DURCH
                           -SPRACHAKTIVITÄTSERKENNUNG
                           -PAUSEN-/RAUSCHDETEKTION
                           -PEGELDETEKTION                        10
                           -LAUTHEITSDETEKTION
                           -MODULATIONSERKENNUNG
                                    ⋮


INFORM.-                              NICHT-INFORM.-
TRAGENDER        14      22           TRAGENDER
ABSCHNITT                             ABSCHNITT
(MODULATION)                          (PAUSE, RAUSCHEN)


FIG. 2

HINWEIS AUF
14 MODULATION

HINWEIS AUF
22 PAUSE

26

VORBESTIMMTE
MINIMALLÄNGE

18

AUDIOSIGNAL

ERZEUGEN DURCH:
-EXTRAKTION DES INFORMATIONS-
 TRAGENDEN ABSCHNITTS
-PAUSENHINZUFÜGUNG
-EINBLENDEN/AUSBLENDEN
-SPRACHERKENNUNG
-REKURSIVE OPTIMIERUNG MEHERER
 TESTSIGNALABSCHNITTE

12

24

VORBESTIMMTE
MAXIMALLÄNGE

28

VORBESTIMMTES
PAUSEN/MODULATIONS-
VERHÄLTNIS IN EINEM
TESTSIGNALABSCHNITT

20

SEQUENZ VON TEST-
SIGNALABSCHNITTEN

FIG. 3

FIG. 4 (ERFINDUNG)

FIG. 5

DURCH DUT (Z.B. TELE-
PHONVERBINDUNG,
CODIERER/DECODIERER)
VERZERRTES AUDIOSIGNAL

URSPRÜNGLICHES
AUDIOSIGNAL

600

OUT

602

604

SUBJEKT

MODELL

SUBJEKTIVER
HÖRTEST MIT
TESTPERSON

OBJEKTIVER
HÖRTEST
(ALGORITHMISCH)

FIG. 6

**IN DER BESCHREIBUNG AUFGEFÜHRTE DOKUMENTE**

**In der Beschreibung aufgeführte Patentdokumente**

- EP 1271470 A1
- WO 02065456 A1